# NEW EUROPEAN PATENT SPECIFICATION

(11) **EP 2 163 860 B2**
(45) Date of publication and mention of the opposition decision: **05.03.2014**
(45) Mention of the grant of the patent: 01.12.2010
(21) Application number: 08380263.7
(22) Date of filing: 10.09.2008
(51) Int. Cl.: G01D 5/347

(54) **Optoelectronic measuring device**
Optoelektronisches Messgerät
Dispositif de mesure opto-électronique

(43) Date of publication of application: 17.03.2010
(73) Proprietor: FAGOR, S.COOP., 20500 Mondragon (Gipuzkoa) (ES)
(72) Inventor: Morlanes Calvo, Tomás, 01011 Vitoria-Gasteiz (Alava) (ES); De la Peña Azarola, Jose Luis, 39005 Santander (ES); Oti González, Jose Emilio, 39001 Santander (ES)
(74) Representative: Igartua, Ismael

(56) References cited:
- EP-A1- 0 513 427
- EP-A1- 1 577 645
- EP-B1- 1 002 219
- US-A- 3 985 448
- US-A- 4 678 908
- US-A- 4 717 824
- US-A- 5 497 083
- US-A1- 2008 117 440

## Description

### TECHNICAL FIELD

The present invention relates to optoelectronic measuring devices, and more specifically to optoelectronic measuring devices designed to detect reference marks and generate at least one reference pulse corresponding to said detection.

### PRIOR ART

There are known optoelectronic measuring devices that comprise a first element and a second element that move between each other, the relative position of one being determined in relation to the other. In some of these devices the relative movement is rotary while in others the movement is linear, one of the elements in this last case being a static graduated scale and the other element a readhead that moves in relation to the graduated scale in a direction of linear movement.

The graduated scale comprises a plurality of periodic marks distributed in the direction of movement with a determined period, and the readhead comprises at least one light emitter to light up said graduated scale and an analyser to receive the light that reflects on or passes through said graduated scale, the relative position between the two elements being determined by the light that reaches photodetector means disposed in said analyser. Generally, devices of this type also comprise at least one reference mark disposed in the graduated scale (or disposed in parallel to said graduated scale, for example) in order to obtain a specific reference position, the relative position between the two elements being determined by taking said reference position as a reference. The readhead lights up the reference mark by means of the light emitter and the light that reflects on or passes through said reference mark reaches the analyser, said analyser generating a reference pulse according to the received light. Said analyser comprises a reticule with at least one transparent stripe adapted to the reference mark through which the light that reaches them passes, and photodetector means that generate a reference signal according to the light that passes through said transparent stripe, said reference signal corresponding with the reference pulse when said light corresponds with the light that passes through or reflects on the reference mark, the reference position thereby being determined when said reference signal comprises said pulse.

Document U54678908A1 discloses a device that comprises a graduated scale with periodic marks and at least one reference mark, and a readhead with an analyser designed to detect the periodic marks and the reference mark, the analyser comprising photodetector means designed to generate a reference signal corresponding to said reference mark, the reference signal comprising a pulse when said reference mark is detected. Said document also discloses that the pulse of said reference signal is optimal when it comprises a width substantially equal to the determined period of the periodic marks of the graduated scale at approximately half the height of the pulse, and a width substantially equal to double said determined period in the base of said pulse. For this purpose the analyser comprises a reticule with a transparent stripe with a width equal to a whole multiple of said determined period, through which passes the light that passes through or reflects on the graduated scale, said light reaching the photodetector means that generate the reference signal according to said received light.

Some devices that comprise an analyser designed to detect at least one reference mark also comprise said reference mark integrated between the periodic marks of the graduated scale, such as the devices disclosed in documents US3985448 and EP1002219B1.

### DISCLOSURE OF THE INVENTION

It is an object of the invention to provide an optoelectronic measuring device that presents an alternative to the optoelectronic measuring devices known in the prior art.

The optoelectronic measuring device of the invention comprises a graduated scale and a readhead that may move in relation to the graduated scale in a linear direction of movement. The graduated scale comprises a plurality of periodic marks distributed along the direction of movement with a determined period and at least one reference code, said reference code comprising at least one reference mark that is integrated between the periodic marks. The readhead comprises a light emitter to emit light towards the graduated scale and an analyser that comprises a reticule and photodetector means. The reticule faces the graduated scale and comprises at least one stripe code with at least one transparent stripe associated to the reference mark, through which may pass the light that reflects or passes through the graduated scale to reach the photodetector means.

The reference code comprises two reference groups, each of the reference groups comprising at least one reference mark and the reference groups being distributed in the direction of movement in such a way that one of said reference groups corresponds with the specular image of the other reference group in relation to a first imaginary specular axis perpendicular to said direction of movement disposed between both groups. The stripe code comprises two stripe groups, each of said stripe groups being associated to a reference group of the reference code and each of the stripe groups comprising at least one transparent stripe associated to the reference mark of the corresponding reference group, each of the stripe groups being distributed in the direction of movement in such a way that one of said stripe groups corresponds with the specular image of the other stripe group in relation to a second imaginary specular axis perpendicular to said direction of movement disposed between both groups.

Thanks to said arrangement of the readhead and the graduated scale, the assembly of said readhead in relation to said graduated scale is more flexible, therefore making the assembly of the device of the invention more flexible.

These and other advantages and characteristics of the invention will be made evident in the light of the drawings and the detailed description thereof.

### DESCRIPTION OF THE DRAWINGS

Figure 1 shows an embodiment of the optoelectronic measuring device of the invention.
Figure 2 is a partial ground view of an embodiment of the graduated scale of the device of Figure 1, wherein the reference marks of a reference code are shown integrated between periodic marks.
Figure 3 shows the reference code of Figure 2.
Figure 4a is a partial ground view of a configuration of the reticule of the device of Figure 1, adapted to the reference code of Figures 2 and 3.
Figure 4b is a partial ground view of another configuration of the reticule of the device of Figure 1, adapted to the reference code of Figures 2 and 3.
Figure 4c is a partial ground view of another configuration of the reticule of the device of Figure 1, adapted to the reference code of Figures 2 and 3.
Figure 5 shows a reference pulse of a reference signal generated by the device of Figure 1.
Figure 6 is a partial ground view of the reticule of Figure 4a, with two groups of additional stripes.

### DETAILED DISCLOSURE OF THE INVENTION

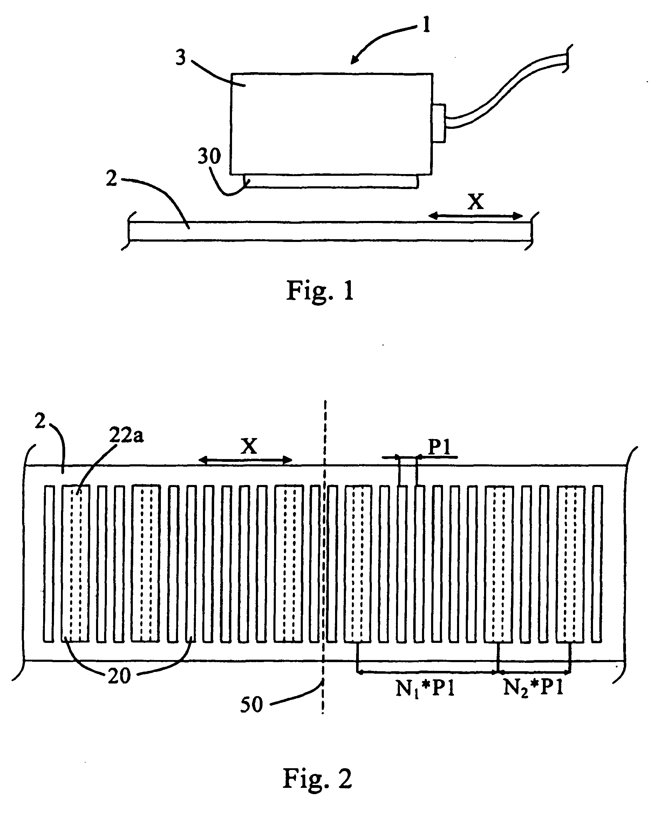

Figure 1 shows an embodiment of the optoelectronic measuring device 1 of the invention, which comprises a graduated scale 2 and a readhead 3. The readhead 3 may move in relation to the graduated scale 2 in a linear direction of movement X, in one or another direction, the relative position of said readhead 3 in relation to said graduated scale 2 being possible to be determined.

The readhead 3 comprises a light emitter (not shown in the figures) to light up the graduated scale 2 and an analyser that is designed to receive the light that passes through or reflects on the graduated scale 2, said analyser comprising photodetector means (not shown in the figures) designed to generate at least some control signals according to said received light. The graduated scale 2 comprises a plurality of periodic marks 20 distributed all the way along the direction of movement X with a determined period P1, and said control signals correspond with two conventional signals in quadrature used in said devices as a result of the periodic marks 20 of said graduated scale 2. The description of the invention that follows pertains to cases where the light that reaches the photodetector means has been reflected on the graduated scale 2, although the invention may also be used in cases where said light passes through said graduated scale 2.

The graduated scale 2 also comprises at least one reference code 22 that also comprises two reference groups 221 and 222, each reference group 221 and 222 comprising at least one reference mark 22a with a maximum width of substantially half the determined period P1 and which is integrated between the periodic marks 20, said reference mark 22a and said periodic marks 20 being capable of being transparent to enable light to pass through and the rest of the graduated scale 2 being opaque to prevent this, or themselves being opaque to prevent said light from passing through, it being the rest of the graduated scale 2 that enables said passage.

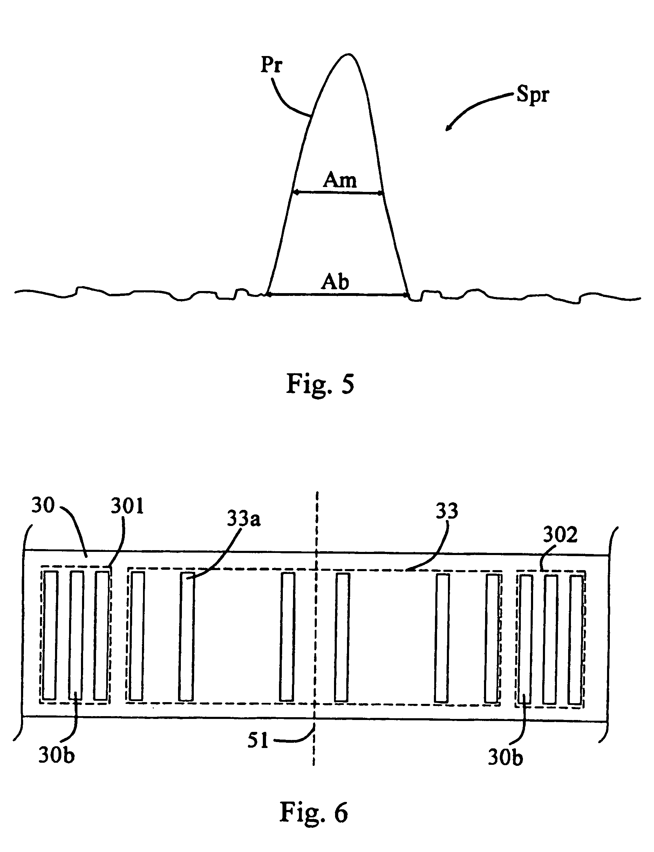

The analyser comprises a reticule 30 that faces the graduated scale 2 and which comprises at least one stripe code 33 associated to each reference code 22. Each stripe code 33 comprises two stripe groups 331 and 332, each of said stripe groups 331 and 332 being associated to a reference group 221 and 222 and each stripe group 331 and 332 comprising at least one transparent stripe 33a associated to the reference mark 22a of the corresponding reference group 221 and 222, through which light reflected on the graduated scale 2 may reach the photodetector means, said photodetector means being designed to generate a reference signal Srp that presents a pulse Pr when the readhead 3 passes over the reference code 22 during its movement in relation to the graduated scale 2, said pulse Pr being capable of being positive, such as the one shown in Figure 5, or negative. Said pulse Pr may be associated with a certain reference position between the readhead 3 and the graduated scale 2, the relative position between both being determined according to said reference position. A pulse Pr is optimal when it comprises a width Ab substantially equal to double the determined period P1 of the periodic marks 20 in its base and a width Am substantially equal to said determined period P1 at approximately half the height of said pulse Pr.

The reference groups 221 and 222 are distributed in the direction of movement X in such a way that one of said reference groups 221 or 222 corresponds with the specular image of the reference group 222 or 221 in relation to an imaginary specular axis 50 perpendicular to said direction of movement X and disposed between both reference groups 221 and 222. The stripe groups 331 and 332 are distributed in the direction of movement X in such a way that one of said stripe groups 331 or 332 corresponds with the specular image of the other stripe group 332 or 331 in relation to a second specular imaginary axis 51 perpendicular to said direction of movement X and disposed between both stripe groups 331 and 332. Thus, both the reference code 22 and the stripe code 33 present a symmetrical arrangement.

The symmetrical arrangements of the reference code 22 in the graduated scale 2 and the stripe code 33 in the reticule 30 of the analyser in relation to a respective imaginary specular axis 50, 51 perpendicular to the direction of movement X enable the readhead 3 to be fitted in the direction shown in Figure 1 or rotated 180° in relation to said direction, a pulse Pr in the reference signal Srp with the same characteristics always being obtained in either case when the readhead 3 passes over said reference code 22, the assembly of the readhead 3 being more flexible, and, therefore, the assembly of the device 1 of the invention being more flexible.

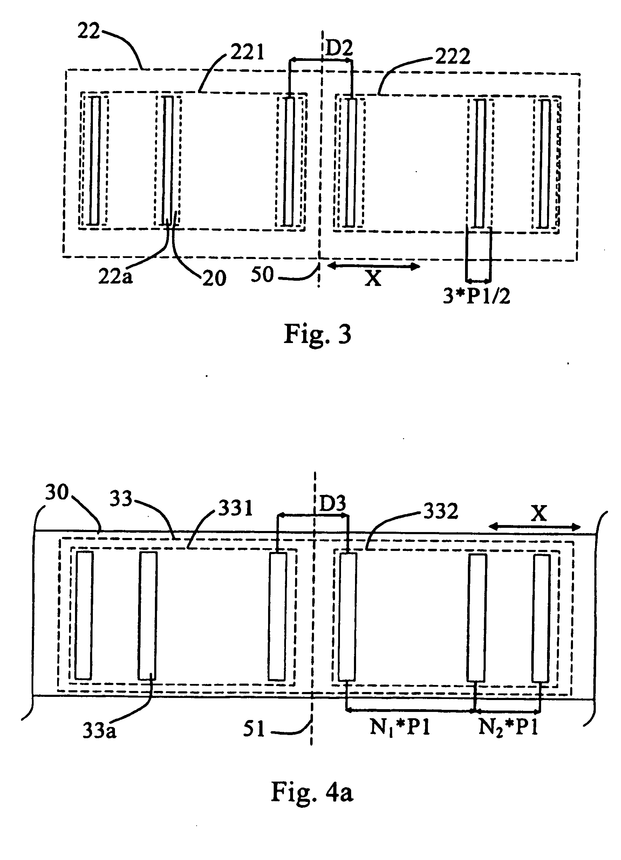

In a preferred embodiment, each reference group 221 and 222 comprises a plurality of reference marks 22a as shown in the configuration of Figures 2 and 3, with a width equal to half the determined period P1. The reference marks 22a are distributed according to a specific sequence in which the distance between any two adjoining reference marks 22a is not always the same, said distances preferably resulting in a multiple N (N₁, N₂, ...) of the determined period P1, the value of said multiple N (N₁, N₂, ...) being a positive whole value. In the configuration of the reference code 22 of Figures 2 and 3, each reference group 221 and 222 comprises three reference marks 22a integrated between the periodic marks 20, the distance between the first two reference marks 22a being four determined periods P1, and the distance between the second and the third reference mark 22a being eight determined periods P1, although it is clear that the multiples N may be different and that there may be more or less reference marks 22a giving rise to different configurations, with the result that the number of reference marks 22a and the distances between said reference marks 22a of said configuration should only be interpreted by way of example. The visual effect of a reference mark 22a disposed in an integrated manner between periodic marks 20 is that of a mark with a width of three halves of the determined periods P1, shown in Figure 3.

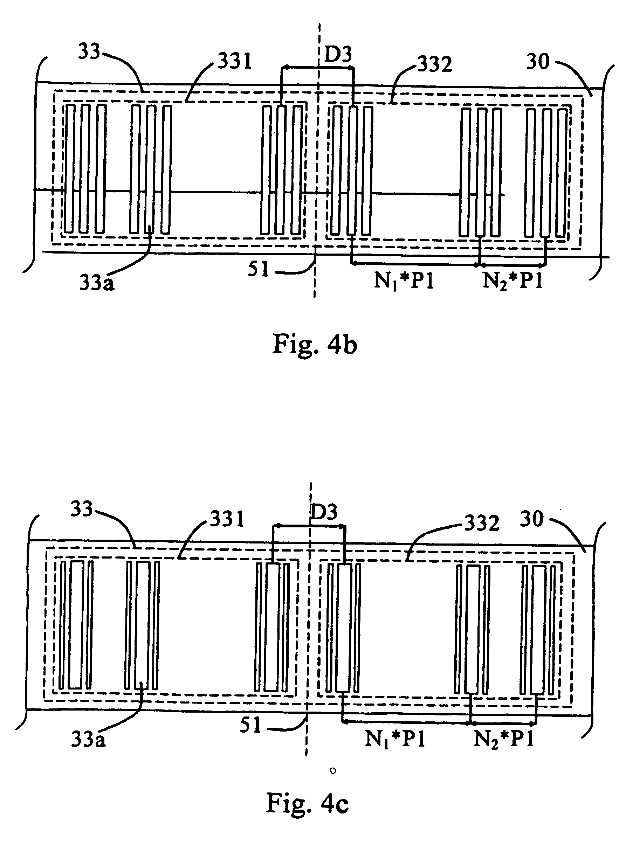

In the preferred embodiment each stripe groups 331 and 332 comprises a number of transparent stripes 33a equal to the number of reference marks 22a of each reference group 221 and 222, as shown in the configuration of Figure 4a, which is adapted to the configuration of the reference code 22 of Figures 2 and 3, with a width equal to or greater than the determined period P1, preferably equal to two determined periods P1, although it may also have a set of transparent stripes with a plurality of transparent stripes 33a associated to each reference mark 22a, it being capable of comprising in this case widths different to said determined period P1, as shown in the configurations of Figures 4b and 4c, which are adapted to the configuration of the reference code 22 shown in Figures 2 and 3. In the configuration of Figure 4b each set is made up of three transparent stripes 33a of an equal width, whereas in the configuration of Figure 4b each set is made up of three transparent stripes 33a of a different width, although each set may be made up of more or less transparent stripes 33a and widths different to those shown in said Figures 4b and 4c. The transparent stripes 33a (or sets) are distributed according to a specific sequence in which the distance between any two adjoining transparent stripes 33a (or two sets of adjoining transparent stripes 33a) is not always the same, said distances preferably resulting in a multiple N of the determined period P1, the value of said multiple N being a positive whole value. The sequences according to which the reference marks 22a and the transparent stripes 33a (or set of transparent stripes 33a) are distributed are equal, in other words, the distance between the centres of two adjoining reference marks 22a and the distance between the centres of their two associated transparent stripes 33a (or the distance between the centres of the two sets of associated transparent stripes 33a) is the same.

The reference groups 221 and 222 are separated from each other by a first distance D2 of separation that is comprised between the centres of the reference marks 22a closest to the first specular axis 50 that correspond to each reference group 221 and 222, as shown in Figure 3, and which depends on the determined period P1, with the result that it is preferably equal to a whole multiple of the determined period P1. The stripe groups 331 and 332 are separated from each other by a second distance D3 of separation that is comprised between the centres of the transparent stripes 33a (or set of transparent stripes 33a) closest to the specular axis 51 that correspond to each stripe groups 331 and 332 and which preferably depends on the determined period P1. Thus, the second distance D3 is approximately equal to the first distance D2 minus half the determined period P1.

Thus, with the device of the invention, due to the arrangement and configuration of the reference code 22 and the stripe code 33, a reference signal Srp with an optimal reference pulse Pr such as the one referred to previously may also be obtained, when the light that passes through or reflects on the reference code 22 through the reticule 30 reaches the corresponding photodetector means.

The reference signal Srp generated by photodetector means is susceptible to changes, for example, if there are changes in temperature, there being a risk that an optimal pulse Pr may not be obtained under certain conditions. To reduce this risk the reticule 30 may also comprise at least one additional stripe 30b that comprises an area that is adapted so that the amount of light that may pass through said additional stripe 30b is substantially equal to the amount of light that may pass through the stripe code 33. Preferably, said additional stripe 30b is disposed adjacent to the reference code 33 in the direction of movement X, although this is not an essential requirement. Once it has reflected on or passed through the graduated scale 2, the light reaches a specific area of the reticule 30 and it is sufficient that the additional stripe 30b is disposed inside said area, regardless of whether it is disposed adjacent to the stripe code 33 in the direction of movement X.

Instead of an additional stripe 30b the reticule 30 may comprise two or more additional stripes 30b, the sum of all the areas comprised by said additional stripes 30b being adapted so that the amount of light that may pass through said additional stripes 30b is substantially equal to the amount of light that may pass through the stripe code 33. In addition, said additional stripes 30b may be distributed in the direction of movement X in such a way that they may form additional stripe groups 301 and 302, each one with at least one additional stripe 30b that are symmetrical in relation to the second specular axis 51.

In the preferred embodiment, the reticule 30 comprises two additional stripe groups 301 and 302 disposed symmetrically in relation to the second specular axis 51 and adjacent to the respective stripe groups 331 or 332, each of said additional stripe groups 301 and 302 comprising a plurality of additional stripes 30b distributed in the direction of movement X with a period equal to a whole multiple of the determined period P1, as shown in Figure 6. Preferably said additional stripes 30b comprise a width equal to the single stripe, which preferably contains the set of transparent stripes 33a of the stripe groups 331 and 332.

The photodetector means are also adapted to receive the light that passes through the additional stripes 30b, a comparison signal not shown in the figures also being generated according to said light received through said additional stripes 30b, which is substantially constant (in the areas where the reference marks 22a are integrated between the periodic marks 20, it undergoes changes that may be negligible). Thus, the subtraction between the reference signal and the comparison signal results in a comparison pulse with the same optimal characteristics as the pulse Pr of the reference signal Srp. As the area of the additional stripes 30b is adapted to as much light as the sets of transparent stripes 33a, the temperature changes that the device may suffer, for example, affect the light that passes through said additional stripes 30b as much as the light that passes through said sets of transparent stripes 33a, a comparison pulse with the optimal characteristics thereby being obtained following the subtraction between said reference signal and said comparison signal. The analyser comprises means designed to carry out the subtraction between said reference signal and said comparison signal.

As a result, the device of the invention presents a high degree of protection against changes in conditions such as the temperature, thus enabling pulses with optimal characteristics to be obtained in a wider range of ambient conditions.

## Claims

1. Optoelectronic measuring device which comprises a graduated scale (2) and a readhead (3) which may move in relation to the graduated scale (2) in a direction of movement (X),
the graduated scale (2) comprising
a plurality of periodic marks (20) distributed along the direction of movement (X) with a determined period (P1) and
at least one reference code (22) that comprises at least one reference mark (22a) integrated between the periodic marks (20),
and the readhead (3) comprising
a light emitter to emit light towards the graduated scale (2), and
an analyser that comprises a reticule (30) that faces the graduated scale (2) and which comprises at least one stripe code (33) comprising at least one transparent stripe (33a) associated to the reference mark (22a) of the reference code (22), through which the light that reflects on or passes through the graduated scale (2) may pass, and photodetector means that are reached by said light,
**characterised in that**
the reference code (22) comprises two reference groups (221, 222), each of the reference groups (221, 222) comprising at least one reference mark (22a) and the reference groups (221, 222) being distributed in the direction of movement (X) in such a way that one of said reference groups (221, 222) corresponds with the specular image of the other reference group (222, 221) in relation to a first imaginary specular axis (50) perpendicular to said direction of movement (X) disposed between both groups (221, 222), and
**in that**
the stripe code (33) comprises two stripe groups (331, 332), each of said stripe groups (331, 332) being associated to a reference group (221, 222) and each of the stripe groups (331, 332) comprising at least one transparent stripe (33a) associated to the reference mark (22a) of the corresponding reference group (221, 222), each of the stripe groups (331, 332) being distributed in the direction of movement (X) in such a way that one of said stripe groups (331, 332) corresponds with the specular image of the other stripe group (332, 331) in relation to a second imaginary specular axis (51) perpendicular to said direction of movement (X) disposed between both stripe groups (331, 332),
the reference groups (221, 222) being separated from each other by a first distance (D2) of separation which is comprised between the centres of the reference marks (22a) closest to the first specular axis (50) corresponding to each reference group (221, 222) and which corresponds with a whole multiple of the determined period (P1), and
the stripe groups (331, 332) being separated from each other by a second distance (D3) of separation that is comprised between the centres of the transparent stripes (33a) closest to the second specular axis (51) corresponding to each stripe group (331, 332), the second distance (D3) being approximately equal to the first distance (D2) minus half the determined period (P1).

2. Device according to claim 1, wherein each stripe group (331, 332) comprises a single transparent stripe (33a) associated to the reference mark (22a) of the corresponding reference group (221, 222).

3. Device according to claim 2, wherein each reference group (221, 222) comprises a plurality of reference marks (22a), the reference marks (22a) being distributed in the reference groups (221, 222) according to a specific sequence of distances relative to each other, and the transparent stripes (33a) or sets of transparent stripes (33a) being distributed in the stripe groups (331, 332) according to a specific sequence of distances relative to each other, said specific sequences being equal.

4. Device according to any of claims 1 to 3, wherein each transparent stripe (33a) of the stripe groups (331, 332) has a width equal to or greater than the determined period (P1).

5. Device according to claim 1, wherein each stripe group (331, 332) comprises a plurality of transparent stripes (33a) associated to the reference mark (22a) of the corresponding reference group (221, 222).

6. Device according to claim 5, wherein each reference group (221, 222) comprises a plurality of reference marks (22a), the reference marks (22a) being distributed in the reference groups (221, 222) according to a specific sequence of distances relative to each other, and the sets of transparent stripes (33a) being distributed in the stripe groups (331, 332) according to a specific sequence of distances relative to each other, said specific sequences being equal.

7. Device according to any of claims 1 to 6, wherein the reticule (30) comprises at least one additional stripe (30b) disposed adjacent to the stripe code (33), said additional stripe (30b) comprising an area adapted so that the amount of light that may pass through said additional stripe (30b) is substantially equal to the amount of light that may pass through said stripe code (33).

8. Device according to any of claims 1 to 6, wherein the reticule (30) comprises two additional stripes (30b) disposed adjacent to the stripe code (33) in the direction of movement (X) in such a way that one of said additional stripes (30b) corresponds with a specular image of the other additional stripe (30b) in relation to the second specular axis (51), the sum of the areas comprised by said additional stripes (30b) being adapted so that the amount of light that may pass through said additional stripes (30b) is substantially equal to the amount of light that may pass through the stripe code (33).

9. Device according to any of claims 1 to 6, wherein the reticule (30) comprises more than two additional stripes (30b), the sum of the areas comprised by said additional stripes (30b) being adapted so that the amount of light that may pass through said additional stripes (30b) is substantially equal to the amount of light that may pass through the stripe code (33).

10. Device according to claim 9, wherein the reticule (30) comprises two additional stripe groups (301, 302) that are disposed adjacent to the stripe code (33) in the direction of movement (X) in such a way that one of said additional stripe groups (301, 302) corresponds with a specular image of the other additional stripe group (301, 302) in relation to the second specular axis (51).

11. Device according to any of claims 9 or 10, wherein the additional stripes (30b) of each additional stripe group (301, 302) are distributed in the direction of movement (X) with a period equal to a whole multiple of the determined period (P1).

12. Device according to claim 11, wherein the additional stripes (30b) comprise a width equal to the width of the transparent stripe that is contained in the sets of transparent stripes (33a) of the stripe groups (331, 332).

13. Device according to any of claims 1 to 12, wherein the reference marks (22a) have a width equal to half the determined period (P1).

## Patentansprüche

1. Optoelektronisches Messgerät, umfassend eine Teilstrichskala (2) und einen Lesekopf (3), der sich über die Teilstrichskala (2) in eine Bewegungsrichtung (X) verlagern kann,
wobei die Teilstrichskala (2)
eine Reihe regelmäßig entlang der Bewegungsrichtung (X) verteilte Markierungen (20) mit einer bestimmten Periode (P1) umfasst und
zumindest einen Referenzcode (22), der mindestens eine Referenzmarkierung (22a) umfasst, die zwischen den regelmäßig verteilten Markierungen (20) integriert ist,
und der Lesekopf (3)
einen lichtemittierenden Sender zum Strahlen von Licht auf die Teilstrichskala (2) umfasst sowie
einen Analysator, der eine Strichplatte (30) umfasst, die zur Teilstrichskala (2) zeigt und mindestens einen Streifencode (33) enthält, welche mindestens einen transparenten Streifen (33a) umfasst, der mit der Referenzmarkierung (22a) des Referenzcodes (22) zugeordnet ist, über den das Licht, das von der Teilstrichskala (2) reflektiert oder zurückgeworfen wird, durchgehen kann, und einen Vorrichtung mit einem lichtempfindlichen Sensor, den dieses Licht erreicht,
**dadurch gekennzeichnet, dass**
der Referenzcode (22) zwei Referenzgruppen (221, 222) umfasst, wobei jede der Referenzgruppen (221, 222) mindestens eine Referenzmarkierung (22a) umfasst und die Referenzgruppen (221, 222) so in Bewegungsrichtung (X) verteilt sind, dass eine dieser Referenzgruppen (221, 222) mit dem Spiegelbild der anderen Referenzgruppe (222, 221) im Verhältnis zu einer ersten imaginären Spiegelachse (50) übereinstimmt, die rechtwinklig zur Bewegungsrichtung (X)zwischen den beiden Gruppen (221, 222) angeordnet ist, und
dadurch, dass
der Streifencode (33) zwei Streifengruppen (331, 332) umfasst, wobei jede dieser Streifengruppen (331, 332) einer Referenzgruppe (221, 222) zugeordnet ist und jede der Streifengruppen (331, 332) mindestens einen transparenten Streifen (33a) umfasst, der der Referenzmarkierung (22a) der jeweiligen Referenzgruppe (221, 222) zugeordnet ist, wobei jede der Streifengruppen (331, 332) so in Bewegungsrichtung (X) verteilt ist, dass eine dieser Streifengruppen (331, 332) mit dem Spiegelbild der anderen Streifengruppe (332, 331) im Verhältnis zu einer zweiten imaginären Spiegelachse (51) übereinstimmt, welche rechtwinklig zur Bewegungsrichtung (X) zwischen beiden Streifengruppen (331, 332) angeordnet ist,
wobei die Referenzgruppen (221, 222) untereinander jeweils von einer ersten Abstandsdistanz (D2) getrennt sind, die zwischen der Mitte der Referenzmarkierungen (22a) liegt, die am nächsten an der ersten Spiegelachse (50) einer jeden Referenzgruppe (221, 222) liegt und die einem ganzen Vielfachen der bestimmten Periode (P1) entspricht, und
wobie die Streifengruppen (331, 332) untereinander jeweils von einer zweiten Abstandsdistanz (D3) getrennt sind, die zwischen der Mitte der transparenten Streifen (33a) liegt, die am nächsten an der zweiten Spiegelachse (51) einer jeden Streifengruppe (331, 332) liegt, wobei die zweite Distanz (D3) ungefähr gleich groß ist, wie die erste Distanz (D2) abzüglich der der bestimmten Periode (P1).

2. Vorrichtung gemäß Anspruch 1, wobei jede Streifengruppe (331, 332) einen einzigen transparenten Streifen (33a) umfasst, der der Referenzmarkierung (22a) der jeweils entsprechenden Referenzgruppe (221, 222) zugeordnet ist.

3. Vorrichtung gemäß Anspruch 2, wobei jede Referenzgruppe (221, 222) mehrere Referenzmarkierungen (22a) umfasst und die Referenzmarkierungen (22a) nach einer spezifischen Abfolge von Abständen untereinander auf die Referenzgruppen (221, 222) verteilt sind und die transparenten Streifen (33a) oder transparente Streifensets (33a) nach einer spezifischen Abfolge von Abständen untereinander auf die Streifengruppen (331, 332) verteilt sind, wobei die spezifische Abfolge der Abstände gleichmäßig ist.

4. Vorrichtung gemäß Anspruch 1 bis 3, wobei jeder transparente Streifen (33a) der Streifengruppen (331, 332) eine Breite hat, die gleich oder größer die bestimmte Periode (P1) ist.

5. Vorrichtung gemäß Anspruch 1, wobei jede Streifengruppe (331, 332) eine Reihe transparente Streifen (33a) umfasst, die der Referenzmarkierung (22a) der jeweils entsprechenden Referenzgruppe (221, 222) zugeordnet sind.

6. Vorrichtung gemäß Anspruch 5, wobei jede Referenzgruppe (221, 222) eine Reihe von Referenzmarkierungen (22a) umfasst und die Referenzmarkierungen (22a) nach einer spezifischen Abfolge von Abständen untereinander auf die Referenzgruppen (221, 222) verteilt sind und die transparenten Streifensets (33a) auf die Streifengruppen (331, 332) verteilt sind, wobei die spezifische Abfolge der Abstände gleichmäßig ist.

7. Vorrichtung gemäß Anspruch 1 bis 6, wobei die Strichplatte (30) mindestens einen zusätzlichen Streifen (30b) umfasst, der neben dem Streifencode (33) angeordnet ist, wobei der zusätzliche Streifen (30b) einen Bereich umfasst, der so dimensioniert ist, dass die Lichtmenge, die durch den zusätzlichen Streifen (30b) gelangen kann, im Wesentlich gleich groß ist wie die Lichtmenge, die durch diesen Streifencode (33) geht.

8. Vorrichtung gemäß Anspruch 1 bis 6, wobei die Strichplatte (30) zwei zusätzliche Streifen (30b) umfasst, die neben dem Streifencode (33) so in Bewegungsrichtung (X) angeordnet sind, dass einer der zusätzlichen Streifen (30b) mit einem Spiegelbild des anderen zusätzlichen Streifens (30b) im Verhältnis zur zweiten Spiegelachse (51) übereinstimmt und die Summe der Flächen dieser zusätzlichen Streifen (30b) so dimensioniert ist, dass die Lichtmenge, die durch diesen zusätzlichen Streifen (30b) gehen kann, im Wesentlichen gleich groß ist wie die Lichtmenge, die durch den Streifencode (33) gehen kann.

9. Vorrichtung gemäß Anspruch 1 bis 6, wobei die Strichplatte (30) mehr als zwei zusätzliche Streifen (30b) umfasst, wobei die Summe der Flächen dieser zusätzlicher Streifen (30b) so dimensioniert ist, dass die Lichtmenge, die durch diesen zusätzlichen Streifen (30b) gehen, kann im Wesentlichen gleich groß ist wie die Lichtmenge, die durch den Streifencode (33) gehen kann.

10. Vorrichtung gemäß Anspruch 9, wobei die Strichplatte (30) zwei zusätzlichen Streifengruppen (301, 302) umfasst, die neben dem Streifencode (33) so in Bewegungsrichtung (X) angeordnet sind, dass eine dieser zusätzlichen Streifengruppen (301, 302) mit einem Spiegelbild der anderen zusätzlichen Streifengruppe (301, 302) in Verhältnis zu der zweiten Spiegelachse (51) übereinstimmt.

11. Vorrichtung gemäß Anspruch 9 oder 10, wobei die zusätzlichen Streifen (30b) einer jeden zusätzlichen Streifengruppe (301, 302) in Bewegungsrichtung (X) mit einer Periode gleich einem ganzen Vielfachen der bestimmten Periode (P1) verteilt sind.

12. Vorrichtung gemäß Anspruch 11, wobei die zusätzlichen Streifen (30b) eine Breite aufweisen, die gleich der Breite der transparenten Streifen ist, die in den transparenten Streifensets (33a) der Streifengruppen (331, 332) enthalten sind.

13. Vorrichtung gemäß Anspruch 1 bis 12, wobei die Referenzmarkierungen (22a) eine Breite aufweisen, die gleich groß ist wie die Hälfte der bestimmten Periode (P1).

## Revendications

1. Appareil de mesure optoélectronique qui comprend une échelle graduée (2) et une tête de lecture (3) qui peut se déplacer par rapport à l'échelle graduée (2) dans un sens de mouvement (X),
l'échelle graduée (2) comprenant
une pluralité de marques périodiques (20) distribuées le long du sens de mouvement (X) avec une période déterminée (P1) et
au moins un code de référence (22) qui comprend au moins une marque de référence (22a) intégrée entre les marques périodiques (20),
et la tête de lecture (3) comprenant
un émetteur de lumière pour émettre de la lumière en direction de l'échelle graduée (2), et
un analyseur qui comprend une réticule (30) qui fait face à l'échelle graduée (2) et qui comprend au moins un code à barres (33) comprenant au moins une barre transparente (33a) associée à la marque de référence (22a) du code de référence (22), à travers lequel la lumière reflète ou qui peut traverser l'échelle graduée (2) passe et un moyen de photodétection qui peut être atteint par ladite lumière,
**caractérisé en ce que** le code de référence (22) comprend deux groupes de référence (221, 222), chacun des groupes de référence (221, 222) comprenant au moins une marque de référence (22a) et les groupes de référence (221, 222) étant distribués dans le sens du mouvement (X) d'une telle manière que l'un des groupes de référence (221, 222) correspond à l'image spéculaire de l'autre groupe de référence (222, 221) par rapport à un premier axe spéculaire imaginaire (50) perpendiculaire audit sens de mouvement (X) disposé entre les deux groupes (221, 222), et
**en ce que**
le code à barres (33) comprend deux groupes de barres (331, 332), chacun desdits groupes de barres (331, 332) étant associés à un groupe de référence (221, 222) et chacun des groupes de barres (331, 332) comprenant au moins une barre transparente (33a) associée à la marque de référence (22a) du groupe de référence correspondant (221, 222), chacun des groupes de barres (331, 332) étant distribués dans le sens du mouvement (X) de telle manière que lesdits groupes de barres (331, 332) correspondent à l'image spéculaire de l'autre groupe de barres (332, 331) par rapport à un second axe spéculaire imaginaire (51) perpendiculaire audit sens du mouvement (X) disposé entre les deux groupes de barres (331, 332),
les groupes de référence (221, 222) étant séparés les uns des autres par une première distance (D2) de séparation qui est comprise entre les centres des marques de référence (22a) les plus proches au premier axe spéculaire (50) correspondant à chaque groupe de référence (221, 222) et qui correspond à un entier multiple de la période (P1) déterminée, et
les groupes de barres (331, 332) étant séparées les unes des autres par une deuxième distance (D3) de séparation qui est comprise entre les centres des barres transparentes (33a) les plus proches du deuxième axe spéculaire (51) correspondant à chaque groupe du barre (331, 332), la deuxième distance (D3) étant approximativement égale à la première distance (D2) à laquelle est soustraite la moitié de la période (P1) déterminée.

2. Appareil selon la revendication 1, où chaque groupe de barres (331, 332) comprend une seule barre transparente (33a) associée à la marque de référence (22a) du groupe de référence (221, 222).

3. Appareil selon la revendication 2, où chaque groupe de référence (221, 222) comprend une pluralité de marques de référence (22a), les marques de référence (22a) étant distribuées dans les groupes de référence (221, 222) selon une séquence spécifique des distances des uns par rapport aux autres et les barres transparentes (33a) ou ensembles de barres transparentes (33a) distribuées dans les groupes de barres (331, 332) selon une séquence spécifique des distances des uns par rapport aux autres, lesdites séquences spécifiques étant égales.

4. Appareil selon l'une quelconque des revendications 1 à 3, où chaque barre transparente (33a) des groupes de barre (331, 332) a une largeur égale ou supérieure à la période déterminée (P1).

5. Appareil selon la revendication 1, où chaque groupe de barres (331, 332) comprend une pluralité de barres transparentes (33a) associée à la marque de référence (22a) du groupe de référence (221, 222) correspondant.

6. Appareil selon la revendication 5, où chaque groupe de référence (221, 222) comprend une pluralité de marques de référence (22a), les marques de référence (22a) étant distribuées dans les groupes de référence (221, 222) selon une séquence spécifique de distances des unes par rapport aux autres et les ensembles de barres transparentes (33a) distribués dans les groupes de barres (331, 332) selon une séquence spécifique des distances des uns par rapport aux autres, lesdites séquences spécifiques étant égales.

7. Appareil selon l'une quelconque des revendications 1 à 6, où la réticule (30) comprend au moins une barre supplémentaire (30b) disposée dans une position adjacente au code à barres (33), ladite barre supplémentaire (30b) comprenant une zone adaptée de telle manière que la quantité de lumière susceptible de traverser ladite barre supplémentaire (30b) est substantiellement égale à la quantité de lumière susceptible de traverser ledit code à barres (33).

8. Appareil selon l'une quelconque des revendications 1 à 6, où la réticule (30) comprend deux barres supplémentaires (30b) disposées dans une position adjacente au code à barres (33) dans le sens du mouvement (X) d'une manière telle que l'une desdites barres supplémentaires (30b) correspond à une image spéculaire de l'autre barre supplémentaire (30b) par rapport au deuxième axe spéculaire (51), la somme des zones comprises par lesdites barres supplémentaires (30b) étant adaptée de telle manière que la quantité de lumière susceptible de traverser lesdites barres supplémentaires (30b) est substantiellement égale à la quantité de lumière susceptible de traverser le code à barres (33).

9. Appareil selon l'une quelconque des revendications 1 à 6, où la réticule (30) comprend plus de deux barres supplémentaires (30b), la somme des zones composées desdites barres supplémentaires (30b) étant adaptée d'une manière telle que la quantité de lumière susceptible de traverser lesdites barres supplémentaires (30b) est substantiellement égale à la quantité de lumière susceptible de traverser ledit code à barres (33).

10. Appareil selon la revendication 9, où la réticule (30) comprend deux groupes de barres supplémentaires (301, 302) qui sont disposées dans une position adjacente au code à barres (33) dans le sens du mouvement (X) d'une manière telle que l'un desdits groupes de barres supplémentaires (301, 302) correspond à une image spéculaire de l'autre groupe de barres supplémentaire (301, 302) par rapport au second axe spéculaire (51).

11. Appareil selon l'une des revendications 9 ou 10, où les barres supplémentaires (30b) de chaque groupe de barres supplémentaire (301, 302) sont distribuées dans le sens du mouvement (X) avec une période égale à un entier multiple de la période (P1) déterminée.

12. Appareil selon la revendication 11, où les barres supplémentaires (30b) comprennent une largeur égale à celle de la barre transparente qui est contenue dans les jeux de barres transparentes (33a) des groupes de barres (331, 332).

13. Appareil selon l'une quelconque des revendications 1 à 12, où les marques de référence (22a) ont une largeur égale à la moitié de la période déterminée (P1).
